# EUROPEAN PATENT APPLICATION

(11) **EP 3 499 517 A1**
(43) Date of publication of application: **19.06.2019**
(21) Application number: 17380028.5
(22) Date of filing: 13.12.2017
(51) Int. Cl.: H01B 7/14, H01B 13/00, H01B 13/02, H02G 1/10

(54) **SUBSEA CABLE WITH CORE CONDUCTOR HAVING VARIABLE CROSS-SECTION AND METHODS FOR PRODUCING AND INSTALLING THEREOF**

(71) Applicant: Fundación Tecnalia Research & Innovation, 20009 Donostia-San Sebastian, Guipuzcoa (ES)
(72) Inventor: Sellner, Jan, E-48160 Derio Bizkaia (ES); Rico Rubio, Antonio, E-48160 Derio Bizkaia (ES); Berque, Joannes, E-48160 Derio Bizkaia (ES); Nava, Vincenzo, E-48009 Bilbao (ES); DEL Pozo Martín, Alberto, E-48160 Derio Bizkaia (ES)
(74) Representative: Balder IP Law, S.L.

(57) **Abstract**

A method for producing a subsea cable, comprising: providing a first plurality of electrically conductive wires; stranding the first plurality of electrically conductive wires in order to provide a first core conductor of the subsea cable; and stranding, in the first core conductor, a second plurality of electrically conductive wires comprising fewer wires than the first plurality of electrically conductive wires, thereby providing the first core conductor with a plurality of different cross-sections. A method for producing a subsea cable comprising: providing a plurality of electrically conductive wires; for each wire of the plurality of electrically conductive wires: drawing the wire through a first drawing die thereby providing a first electrically conductive drawn wire; and drawing the first electrically conductive drawn wire through a second drawing die thereby providing the first electrically conductive drawn wire with at least two different cross-sections; after the steps of drawing each wire and drawing each first electrically conductive drawn wire, stranding the plurality of first electrically conductive drawn wires thereby providing a first core conductor of the subsea cable with a plurality of different cross-sections. Also, a method for installing a subsea cable in an offshore wind farm.

## Description

### TECHNICAL FIELD

The present invention relates to the field of subsea cables. Particularly, the invention relates to a subsea cable with a core conductor included therein having a variable cross-section, methods for manufacturing the subsea cable and a method for installing the same.

### STATE OF THE ART

The cost of an offshore wind farm is mainly driven by two factors: the cost of the materials and structures thereof, and the cost of installing the structures. One of the tasks that has a major impact on the latter is the installation of subsea cables.

Generally, an offshore wind farm is organized in strings of wind turbines. Each wind turbine of a string generates electricity that needs to be transferred to a substation that, in turn, transfers it to a facility onshore (e.g. electrical grid). In addition to generating electricity, aside from the last wind turbine of a string (the one farthest away from the substation) each wind turbine also receives electrical energy from other wind turbines in the same string so as to transfer it to the substation, namely, the wind turbines relay the electrical energy provided by other wind turbines until it reaches the first wind turbine of a string (the one closest to the substation); the first wind turbine then relays the electrical energy of the entire string (including the electrical energy provided by the first wind turbine) to the substation. Accordingly, as a string of wind turbines is a plurality of wind turbines connected in series, the closer a wind turbine to the substation is, the more electrical energy that wind turbine has to transfer to the next wind turbine towards the substation.

The submarine cables interconnecting wind turbines must withstand the amount of electrical energy that has to be transferred to the substation, and more specifically, since the voltage is constant throughout the string, the submarine cables must withstand the intensity of the electric current. Therefore, on each string of wind turbines connected in series, cables connecting turbines that are closer to the substation must be able to transfer more electric current than cables connecting turbines that are farther away from the substation.

Current density is defined as the electric current per unit area of cross section. The current density magnitude is the electric current per cross-sectional area at a given location on the cable length.

For a specific conductive material that a submarine cable is made of, there is a maximum value of current density that is allowable; beyond this maximum value, it is more likely that the cable will be damaged by overheating, by failure of the insulation, etc. Therefore, the electrical energy that may be transferred by the electrical conductors is limited.

As the conductive material is a significant part of the cost of a subsea cable, it is often economically suboptimal to equip an entire string with the same cross section of conductive material, as further away from the substation, a smaller cross section is needed than closer to the substation because less electrical energy must be transferred.

Offshore wind farms of the prior art deal with the issue of increasing electrical energy in a string by providing a plurality of subsea cables in the string, each subsea cable connecting two consecutive wind turbines and having an electrical conductor adapted to withstand the maximum electric current that may be available between these two consecutive turbines. Hence, aside from the length (dependent on the distance between consecutive pairs of wind turbines), the subsea cables of a same string are different in that the core conductors of the electrical conductors have different cross-sections or diameters (as the same conductive material is generally used) thereby not exceeding the allowable current density value, and hence the different electric currents may be transferred at each leg of the string. So several subsea cables are produced and installed in a same string of the offshore wind farm.

Even though the core conductors have the adequate size to transfer the electrical energy at each leg, the production thereof (including the production of the corresponding electrical conductors and, hence, subsea cables) is discontinuous as it must be adjusted for each pair of consecutive wind turbines. Moreover, each resulting subsea cable must be installed separately in segments of a length corresponding to the distance between the two turbines it connects. Consequently, for a single string, as many subsea cables must be laid as there are consecutive wind turbines. Both discontinuous processes make installing structures of an offshore wind farm not cost-effective.

There is an interest in reducing the cost of offshore wind farms by optimizing the installation of structures thereof. More specifically, there is an interest in optimizing the production and installation of subsea cables in offshore wind farms.

### DESCRIPTION OF THE INVENTION

A first aspect of the invention relates to a method for producing a subsea cable, comprising:
providing a plurality of electrically conductive wires;
for each wire of the plurality of electrically conductive wires:
   drawing the wire through a first drawing die thereby providing a first electrically conductive drawn wire; and
   drawing the first electrically conductive drawn wire through a second drawing die thereby providing the first electrically conductive drawn wire with at least two different cross-sections;
after the steps of drawing each wire and drawing each first electrically conductive drawn wire, stranding the plurality of first electrically conductive drawn wires thereby providing a first core conductor of the subsea cable with a plurality of different cross-sections.

The subsea cable comprises an electrical conductor with a first core conductor adapted to transmit electric current between ends of the subsea cable such that its capacity for transmitting electrical energy varies throughout a length of the same; the subsea cable further comprises insulation and watertight layers. The first core conductor has at least two different cross-sections: when observed from a first end to a second end of the subsea cable, the core conductor has at least one stepped increase in the cross-section or diameter thereof. Therefore, from each portion where the cross-section or diameter increases, additional electric current may be transferred to one end thereof (a first end or a second end) thereby making possible to maintain a current density value within the allowable limits of the conductor.

As the subsea cable interconnects several wind turbines, each wind turbine adds the electric power it provides to the subsea cable for its delivery to a substation. So at each wind turbine, the electric current provided by that wind turbine plus the electric current provided by other wind turbines connected thereto needs to be transferred to further wind turbines or to the substation. In the context of the present disclosure, the term "substation" refers to any facility where the electrical energy provided by a wind farm, particularly an offshore wind farm, is to be delivered or exported at, for example a substation at an offshore wind farm, a substation onshore close to the coast, etc.

With the increase in the cross-section or diameter of the first core conductor the subsea cable may withstand all the electric current that has to be transferred, maintaining a current density value within the allowable limits of the conductor. This makes possible not to require different subsea cables, each having one or more core conductors with a different cross-section, for the progressive addition of electric power to be delivered, something which additionally is more costly since shorter and more intermittent manufacturing processes are necessary in order to provide all the different subsea cables for an offshore wind farm.

The method makes possible to manufacture, in series, a subsea cable in which the core conductor is not unnecessarily oversized (the cross-section or diameter is adjusted according to the electric current to be transported at each leg within allowable current density value). By drawing a first length or portion of each wire, a first length or portion of the first electrically conductive drawn wire has a first cross-section; by drawing a second length or portion of the first electrically conductive drawn wire, the second length or portion has a second cross-section. Then, by stranding the resulting plurality of first electrically conductive drawn wires, the first core conductor is provided with at least two different cross-sections.

In some embodiments, the step of drawing the wire through a first drawing die comprises drawing the wire through a first plurality of drawing dies thereby providing a first electrically conductive drawn wire, the first plurality of drawing dies at least comprising the first drawing die.

In some embodiments, the step of drawing the first electrically conductive drawn wire through a second drawing die comprises drawing the first electrically conductive drawn wire through a second plurality of drawing dies thereby providing the first electrically conductive drawn wire with at least two different cross-sections, the second plurality of drawing dies at least comprising the second drawing die.

In some embodiments, the method further comprises:
for each wire of the plurality of electrically conductive wires:
drawing the first electrically conductive drawn wire with the at least two different cross-sections through a third drawing die, thereby providing the first electrically conductive drawn wire with at least three different cross-sections.

The method makes possible to produce a subsea cable in which the first core conductor has more than two different cross-sections or diameters (e.g. three, four, five or even more different cross-sections or diameters) so that the subsea cable may be used for interconnecting several wind turbines of an offshore wind farm.

The electrically conductive wire is drawn through as many drawing dies or pluralities of drawing dies (e.g. through two, three, four, five or even more drawing dies or pluralities of drawing dies) such that portions of the electrically conductive wire are provided with different cross-sections. When each drawing step is carried out with a plurality of drawing dies, each plurality of drawing dies may be a subset of the plurality of drawing dies of the previous wire drawing (i.e. one or more drawing dies used in the previous wire drawing are not present in the next wire drawing), particularly the drawing die/s having a smaller inner drawing diameter is/are removed; or it may be a plurality of drawing dies different from the plurality of drawing dies of the previous wire drawing as long as the resulting cross-section or diameter of the electrically conductive wire is greater than the cross-section or diameter of the electrically conductive wire after the previous wire drawing (i.e. the last drawing die/s has/have a larger inner drawing diameter than an inner drawing diameter of the last drawing die/s of the previous drawing).

In some embodiments, the step of drawing the first electrically conductive drawn wire with the at least two different cross-sections through a third drawing die comprises drawing the first electrically conductive drawn wire with the at least two different cross-sections through a third plurality of drawing dies, thereby providing the first electrically conductive drawn wire with at least three different cross-sections, the third plurality of drawing dies at least comprising the third drawing die.

In some embodiments, the method further comprises: for each wire of the plurality of electrically conductive wires, withdrawing at least one drawing die of the first plurality of drawing dies to provide the second plurality of drawing dies. In some of these embodiments, the method further comprises: for each wire of the plurality of electrically conductive wires, withdrawing at least one drawing die of the second plurality of drawing dies to provide the third plurality of dies.

Providing the core conductor with two or more different cross-sections may be carried out with ease and in a cost-effective manner by adjusting the different drawing dies of the wire drawing process such as by withdrawing one or more drawing dies having an inner drawing diameter that is a smallest inner drawing diameter among all the drawing dies of the plurality.

In some embodiments, the method further comprises: repeating steps of the method in order to provide at least a second core conductor with a plurality of different cross-sections; and assembling the first and the second core conductors into the subsea cable. In some of these embodiments, the method further comprises: repeating steps of the method in order to provide at least a third core conductor with a plurality of different cross-sections; and the step of assembling the first and the second core conductors into the subsea cable comprises assembling the first, the second and the third core conductors into the subsea cable.

The method can be repeated for each core conductor to be produced, and a plurality of core conductors may be assembled into the subsea cable that is produced so that the subsea cable comprises two, three or more (e.g. four, five, etc.) core conductors. Further, since the production is in series, the cost is reduced with respect to discontinuous production processes such as those in the prior art.

In some embodiments, the method further comprises: providing an insulation layer surrounding each core conductor, the insulation layer comprising a plurality of thicknesses such that a diameter of each core conductor with the insulation layer is constant in a lengthwise direction of each core conductor.

Even though the cross-section or diameter of each core conductor varies along the length of the same, the resulting subsea cable may feature a substantially constant diameter so that any existing machine or process for subsea cable laying may carry out the laying of the subsea cable without any modification.

In some embodiments, the method further comprises providing an insulation layer surrounding each core conductor, the insulation layer having a constant thickness. Further, in these embodiments, the subsea cable comprises a plurality of different outer diameters.

The outer diameter of the resulting subsea cable varies along the length of the same and, thus, the weight of each portion of the subsea cable depends upon the cross-section of each core conductor in each portion. Therefore, as the subsea cable has no compensation of the variation in cross-section of each core conductor so as to maintain a constant cross-section or diameter, the weight of the subsea cable is not increased unnecessarily.

In some embodiments, the method further comprises encapsulating each core conductor by providing a first watertight layer, a plastic filling, an armor bedding layer, a metallic armor layer, a second watertight layer and a plastic yarn layer.

Additional layers for protection of each core conductor and electrical conductor thereof within the subsea cable can be provided as known in the art despite the variable cross-section of each core conductor.

A second aspect of the invention relates to a method for producing a subsea cable, comprising:
providing a first plurality of electrically conductive wires;
stranding the first plurality of electrically conductive wires in order to provide a first core conductor of the subsea cable; and
stranding, in the first core conductor, a second plurality of electrically conductive wires comprising fewer wires than the first plurality of electrically conductive wires, thereby providing the first core conductor with a plurality of different cross-sections.

By stranding different number of electrically conductive wires in two portions of the first core conductor provided (more wires stranded in the first portion than in the second portion), the first core conductor has two different cross-sections or diameters. As the cross-section or diameter of the first core conductor is greater in the first portion than in the second portion, additional electrical energy may be delivered from the first portion to a first end of the subsea cable (the first end being provided on the portion with a greater cross-section or diameter, that is, the first portion).

The second plurality of electrically conductive wires is a subset of electrically conductive wires of the first plurality of electrically conductive wires. That is, the second plurality of electrically conductive wires comprises some of the electrically conductive wires of the first plurality of electrically conductive wires. Upon stranding the first plurality of electrically conductive wires, one or more wires of the first plurality is/are removed or completely stranded (i.e. a length thereof is completely stranded) thereby providing the second plurality of electrically conductive wires that is stranded in the first core conductor.

By stranding the first and the second plurality of electrically conductive wires, the plurality of different cross-sections of the first core conductor comprises two different cross-sections: a first portion has the first plurality of electrically conductive wires stranded therein, and a second portion has the second plurality of electrically conductive wires stranded therein.

In some embodiments, the method further comprises:
stranding, in the first core conductor, a third plurality of electrically conductive wires comprising fewer wires than the second plurality of electrically conductive wires.

The number of electrically conductive wires that are stranded may be adjusted successively so as to provide the first core conductor with a cross-section or diameter having multiple stepped reductions or increases (depending on the direction in which the subsea cable is observed).

The first core conductor results from stranding different pluralities of electrically conductive wires (e.g. two, three, four, five or even more pluralities of electrically conductive wires). Each plurality of electrically conductive wires is a subset of the plurality of electrically conductive wires of the previous stranding (i.e. one or more electrically conductive wires used in the previous stranding are not present in the next stranding, for example the third plurality of electrically conductive wires does not comprise at least one electrically conductive wire of the second plurality of electrically conductive wires).

By stranding the third plurality of electrically conductive wires, the plurality of different cross-sections of the first core conductor comprises three different cross-sections: a first portion has the first plurality of electrically conductive wires stranded therein, a second portion has the second plurality of electrically conductive wires stranded therein, and a third portion has the third plurality of electrically conductive wires stranded therein.

In some embodiments, the method further comprises, after stranding the first plurality of electrically conductive wires, cutting at least one electrically conductive wire of the first plurality of electrically conductive wires to provide the second plurality of electrically conductive wires. The at least one electrically conductive wire of the first plurality of electrically conductive wires is cut before stranding the second plurality of electrically conductive wires. In some of these embodiments, the method further comprises, after stranding the second plurality of electrically conductive wires, cutting at least one electrically conductive wire of the second plurality of electrically conductive wires to provide the third plurality of electrically conductive wires. The at least one electrically conductive wire of the second plurality of electrically conductive wires is cut before stranding the third plurality of electrically conductive wires.

In some embodiments, the method further comprises, before stranding the first plurality of electrically conductive wires, adjusting a length of at least one electrically conductive wire of the first plurality of electrically conductive wires to provide the second plurality of electrically conductive wires upon stranding the first plurality of electrically conductive wires. In some of these embodiments, the method further comprises, before stranding the first plurality of electrically conductive wires, adjusting a length of at least one electrically conductive wire of the second plurality of electrically conductive wires to provide the third plurality of electrically conductive wires upon stranding the second plurality of electrically conductive wires.

The successive steps of stranding electrically conductive wires may be carried out with ease by cutting the electrically conductive wire or wires that are not to be stranded in latter steps of stranding a plurality of electrically conductive wires in the first core conductor. Also, the length of the electrically conductive wire or wires may be adjusted in advance of stranding each plurality of electrically conductive wires so that, instead of having to cut the wire or wires to provide a following plurality of electrically conductive wires, the wire or wires are completely stranded and thus do not have any further length that may be stranded in the following stranding.

In some embodiments, at least one electrically conductive wire of the first plurality of electrically conductive wires has a constant cross-section. In some of these embodiments, each electrically conductive wire of the first plurality of electrically conductive wires has a constant cross-section.

One or more electrically conductive wires to be stranded may have a constant cross-section or diameter such that, for achieving a more significant variation in the cross-section of each core conductor, at each stranding a plurality of electrically conductive wires may have to be removed from the stranding (with respect to the previous stranding).

In some other embodiments, at least one electrically conductive wire of the first plurality of electrically conductive wires has a plurality of different cross-sections. In some of these embodiments, each electrically conductive wire of the first plurality of electrically conductive wires has a plurality of different cross-sections.

By providing one or more electrically conductive wires with a plurality of different cross-sections (such as those of the first aspect of the invention), fewer electrically conductive wires may be necessary in the method since, in addition to the variation in cross-section due to the reduction in electrically conductive wires being stranded each time, the variation in cross-section of the electrically conductive wires modifies the cross-section or diameter of each core conductor between portions thereof.

In some embodiments, the method further comprises: repeating steps of the method in order to provide at least a second core conductor with a plurality of different cross-sections; and assembling the first and the second core conductors into the subsea cable. In some of these embodiments, the method further comprises: repeating steps of the method in order to provide at least a third core conductor with a plurality of different cross-sections; and the step of assembling the first and the second core conductors into the subsea cable comprises assembling the first, the second and the third core conductors into the subsea cable.

As the method can be repeated for each core conductor to be produced, manufacturing in series is possible thereby resulting in a cost reduction.

In some embodiments, the method further comprises: providing an insulation layer surrounding each core conductor, the insulation layer comprising a plurality of thicknesses such that a diameter of each core conductor with the insulation layer is constant in a lengthwise direction of each core conductor.

In some embodiments, the method further comprises: providing an insulation layer surrounding each core conductor, the insulation layer having a constant thickness. Further, in these embodiments, the subsea cable comprises a plurality of different outer diameters.

In some embodiments, the method further comprises encapsulating each core conductor by providing a first watertight layer, a plastic filling, an armor bedding layer, a metallic armor layer, a second watertight layer and a plastic yarn layer.

Similar advantages as those described for the first aspect of the invention may also be applicable to the second aspect of the invention.

A third aspect of the invention relates to a subsea cable obtained with a method according to the first aspect of the invention or the second aspect of the invention.

A fourth aspect of the invention relates to a subsea cable comprising:
at least one electrical conductor;
each of the at least one electrical conductor comprises a core conductor, a first portion of the core conductor having a first cross-section, and a second portion of the core conductor having a second cross-section.

The subsea cable comprises one, two, three or more electrical conductors, each electrical conductor comprising a core conductor with a plurality of different cross-sections that makes possible to transport different electric currents from different points or portions of the core conductor. In this regard, the core conductor comprises a plurality of portions, each portion having a substantially constant cross-section or diameter (throughout that portion) but different (in size) to the cross-sections or diameters of the other portions of the plurality of portions.

In some embodiments, the subsea cable has a substantially constant diameter.

The isolation layer/s of the one, two, three or more electrical conductors may be provided such that a thickness thereof is different in each portion of the plurality of portions of the core conductor. Particularly, the thickness of the isolation layer/s compensates the change in cross-section or diameter of the core conductor so that the diameter of the one, two, three or more electrical conductors is substantially constant between ends thereof, and thus the subsea cable also has a substantially constant diameter between ends thereof.

In some other embodiments, the subsea cable comprises a plurality of portions, each portion having a substantially constant diameter (throughout that portion) but different (in size) to the cross-sections or diameters of the other portions of the plurality of portions.

The isolation layer/s of the one, two, three or more electrical conductors may be provided such that a thickness thereof is substantially constant between ends of the electrical conductor and, thus, between ends of the subsea cable.

Similar advantages as those described for the first and second aspects of the invention may also be applicable to the third and fourth aspects of the invention.

A fifth aspect of the invention relates to a method for installing a subsea cable in an offshore wind farm, the offshore wind farm comprising a substation and a plurality of wind turbines, the method comprising:
laying the subsea cable, continuously, from a first location to a first wind turbine of the plurality of wind turbines passing through at least a second wind turbine of the plurality of wind turbines, the first location being a location of the substation or a location of a third wind turbine of the plurality of wind turbines.

The laying of a subsea cable from the substation to the first wind turbine with one or more intermediate wind turbines in-between (i.e. the one or more wind turbines between the first and the second ends of the subsea cable laid, which may be, for example, one, two, three, four, five, ten or even more wind turbines is done continuously, namely, without providing additional subsea cables or without cutting the subsea cable every time a wind turbine is reached while laying the subsea cable, thereby simplifying the installation of the subsea cable and, thus, reducing the cost thereof. The plurality of wind turbines is preferably arranged as a string of wind turbines.

The installation becomes simpler since only one subsea cable needs to be laid between different wind turbines, or between different wind turbines and the substation. Therefore, with this method it can be avoided having to install different subsea cables between each pair of consecutive wind turbines, and/or between the substation and the wind turbine of the string that is closest to the substation.

With the continuous laying of a subsea cable, for example a submersible apparatus or assembly for installing subsea cables has to be loaded once with a single subsea cable and, therefore, it is not surfaced at each intermediate wind turbine so as to finish the laying of the subsea cable, load another subsea cable and lay it. In this way, subsea cable installation is simplified thereby reducing the overall cost of the offshore wind farm.

In the context of the present disclosure, the term "passing through" refers to laying the subsea cable at a close distance from a named facility (e.g. wind turbine), preferably from a foundation thereof, such that a portion of the subsea cable is at close distance therefrom. The distance between a portion of the subsea cable and the facility is less than 50 meters, and preferably less than 25 meters, and even more preferably less than 10 meters.

In some embodiments, the subsea cable is laid such that a first portion thereof is laid before laying a second portion thereof; and a cross-section of each core conductor in the first portion of the subsea cable is greater than the cross-section of each core conductor in the second portion of the subsea cable.

The subsea cable is laid starting from the substation, and ending at the last wind turbine (i.e. the first wind turbine) of the plurality of wind turbines (from where less electric current needs be transferred), and the cross-section or diameter of each core conductor within the subsea cable laid has one or more stepped reductions (considering the direction in which the subsea cable is being laid).

Subsea cables of the prior art feature different electrical conductors so that the electric current added at intermediate wind turbines may be transferred to another wind turbine of the plurality of wind turbines (for instance at an end of a string of wind turbines) and/or to the substation of the offshore wind farm. This makes that, in addition to having to manufacture different subsea cables, the subsea cables have to be properly identifiable so that the subsea cables are laid in the correct order.

In some embodiments, the method further comprises: at each wind turbine between ends of the subsea cable laid, cutting the subsea cable thereby providing first and second subsea cables, and connecting an end of each of the first and the second subsea cables to the wind turbine. In these embodiments, the steps of cutting the subsea cable and connecting ends of the first and the second subsea cables are carried out after the step of laying the subsea cable.

Once the subsea cable has been laid, it can be electrically connected to each wind turbine by connecting the ends of the subsea cable to the wind turbines of the plurality of wind turbines, and cutting the subsea cable at each intermediate wind turbine so that resulting ends may be connected to each intermediate wind turbine.

Upon installation of the subsea cable, since a plurality of subsea cables is finally provided (as a result of cutting the subsea cable for connection to the wind turbines), in case of failure of one of these subsea cables while the offshore wind farm is in operation, said one subsea cable may be replaced by a subsea cable with core conductor/s having a constant cross-section or diameter. That is, only the subsea cable between two consecutive wind farms needs to be replaced in spite of having continuously laid a single subsea cable featuring a greater length than the subsea cable to be replaced.

In some embodiments, the method further comprises producing the subsea cable with a method according to any of the first and the second aspects of the invention. In some embodiments, the subsea cable is a subsea cable according to any of the third and the fourth aspects of the invention.

In some embodiments, the subsea cable is produced such that the plurality of different cross-sections of each core conductor comprises as many different cross-sections as wind turbines between ends of the subsea cable are upon laying the subsea cable plus one; a length of each core conductor in a first portion thereof is equal to or greater than a distance between the first location and the second wind turbine, the first portion having a greatest cross-section of the plurality of different cross-sections; and lengths of each core conductor in portions different from the first portion are equal to or greater than corresponding distances between each pair of consecutive wind turbines of the plurality of wind turbines.

In order to optimize costs, the capacity for delivering electrical energy of the subsea cable are selected according to: the number of wind turbines to be interconnected (if the first location is the location of the third wind turbine) or the number of wind turbines plus the substation to be interconnected (if the first location is the location of the substation), and the maximum electric current that may be available at any wind turbine at some point during operation of the offshore wind farm. To this end, the subsea cable has as many portions (where each core conductor therein has a different cross-section with respect to other portions of the subsea cable) as there are intermediate wind turbines, plus one, so that a different portion is provided between each two consecutive wind turbines, and/or between the second wind turbine and the substation. Therefore, if when laying the subsea cable it is passed through one, two, three, or more wind turbines (i.e. intermediate wind turbines), the number of portions of the subsea cable is two, three, four or more (i.e. the number of intermediate wind turbines plus one), respectively.

The length of each core conductor in each of these different portions (and, thus, the length of the subsea cable in each of these different portions) is at least the distance of the corresponding pair of consecutive wind turbines, and/or the distance of the substation to the second wind turbine, to be interconnected. Lengths greater than these distances are preferable so that the subsea cable has some play while it is laid.

Since the portion of the subsea cable connecting the first location to the second wind turbine carries the highest amount of electric current, the cross-section or diameter of each core conductor therein is the largest among all the cross-sections or diameters of each core conductor along the subsea cable, being the cross-section of each core conductor of this cable portion adapted to support an allowable current density value, according the electric current to be transported.

Further, similar advantages as those described for the first and second aspects of the invention may also be applicable to the fifth aspect of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows an offshore wind farm.
Figure 2 shows a cross-section of a subsea cable suitable for offshore wind farms.
Figure 3 shows different layers of an electrical conductor of a subsea cable.
Figures 4A-4B, 5A-5B schematically show wire drawing processes.
Figure 6 shows an electrically conductive wire or rod obtained with a wire drawing process of a method in accordance with an embodiment of the invention.
Figure 7-9 show core conductors obtained with methods in accordance with an embodiment of the invention.
Figures 10A-10C schematically show a stranding process of a method for producing the core conductor of Figures 8 and/or 9.
Figure 11 shows a method for installing a subsea cable in an offshore wind farm in accordance with an embodiment of the invention.
Figure 12 shows a subsea cable obtained with a method in accordance with an embodiment of the invention.

### DESCRIPTION OF WAYS OF CARRYING OUT THE INVENTION

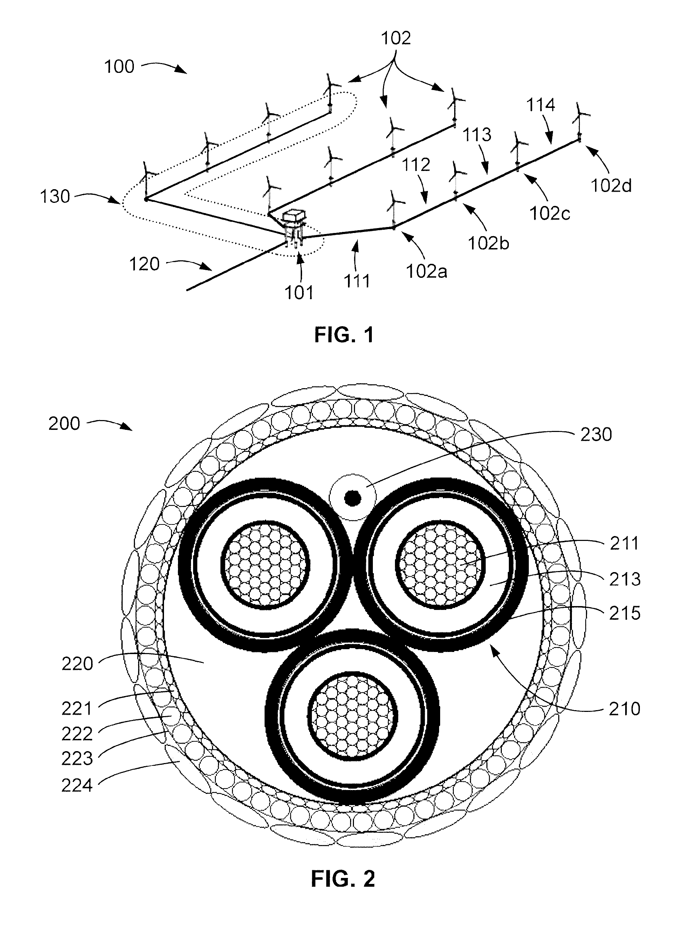

Figure 1 shows an offshore wind farm 100. The offshore wind farm 100 comprises a substation 101 and a plurality of wind turbines 102 arranged in strings (one string 130 is shown with dotted lines for illustrative purposes only). Each string comprises a plurality of wind turbines 102 and has two ends; a first end of each string is the substation 101 and a second end of each string is a wind turbine 102d. Between the two ends of a string there is one or more wind turbines 102a, 102b, 102c (also referred to as intermediate wind turbines within the present disclosure) within the same string that are to be connected to the other wind turbine 102d and the substation 101. In this sense, a first string of the offshore wind farm 100 may be formed by the wind turbines 102a, 102b, 102c as intermediate wind turbines, by the substation 101 as a first end of the first string and a wind turbine 102d as a second end of the first string.

A first subsea cable 111 connects the substation 101 to the first wind turbine 102a so as to transfer the electric current provided by the string of wind turbines 102a-102d to the substation 101. Between the first and a second wind turbines 102a, 102b there is a second subsea cable 112 for transferring the electric current provided by the second, a third and a fourth wind turbines 102b-102d to the first wind turbine 102a. A third subsea cable 113 connects the second and the third wind turbines 102b, 102c in order to deliver the aggregate electric current that is provided by the third and the fourth wind turbines 102c, 102d. And a fourth subsea cable 114 connects the fourth wind turbine 102d to the third wind turbine 102c in order to deliver the electric current provided by the fourth wind turbine 102d.

The closer a subsea cable 111-114 is to the substation 101, the greater the cross-section of the core conductors within the subsea cable must be to transmit the electrical energy provided by the wind turbines 102 that are farther away from the substation 101.

The substation 101 receives the electrical energy provided by each wind turbine 102 of each string 130 of the offshore wind farm 100 and delivers it through a subsea cable 120 to a facility that may be remote from the substation 101 (generally, an onshore electrical grid). In some examples, the substation 101 is onshore and close to a sea.

Figure 2 shows a cross-section of a subsea cable 200 suitable for offshore wind farms. The subsea cable 200 comprises a plurality of electrical conductors 210, an optical fiber 230, and a plurality of layers 221-224 for protecting the electrical conductors 210 and the optical fiber 230.

A first layer 221 is an armor bedding layer encapsulating each of the electrical conductors 210 and the optical fiber 230. A second layer 222 is a metallic armor layer that surrounds the armor bedding layer with steel wires helically drawn that increase a mechanical resistance of the subsea cable 200. A third layer 223 is a watertight layer for preventing that water gets within the subsea cable 200. A fourth layer 224 is a plastic yarn layer for protecting the subsea cable 200 against abrasion.

Each electrical conductor 210 comprises a core conductor 211, an insulation layer 213 surrounding the core conductor 211, and a watertight layer 215 surrounding the insulation layer 213. In addition to the conductivity of the electrically conductive material forming the core conductor 211, a cross-section of the core conductor 211 limits the electric current that the electrical conductors 210 may transfer: for a same electrically conductive material, a core conductor 211 having a greater diameter may conduct more electric current than a core conductor having a smaller diameter.

Further, a plastic filling 220 fills the space between the electrical conductors 210 and the optical fiber 230, and the first layer 221 encapsulating them. The plastic filling 220 provides the subsea cable 200 with constant geometry and external stability.

In other embodiments, the subsea cable 200 comprises one electrical conductor 210, two electrical conductors 210 or more than three electrical conductors 210. Similarly, in other embodiments, the subsea cable 200 does not comprise an optical fiber 230, or comprises even more than one optical fiber 230.

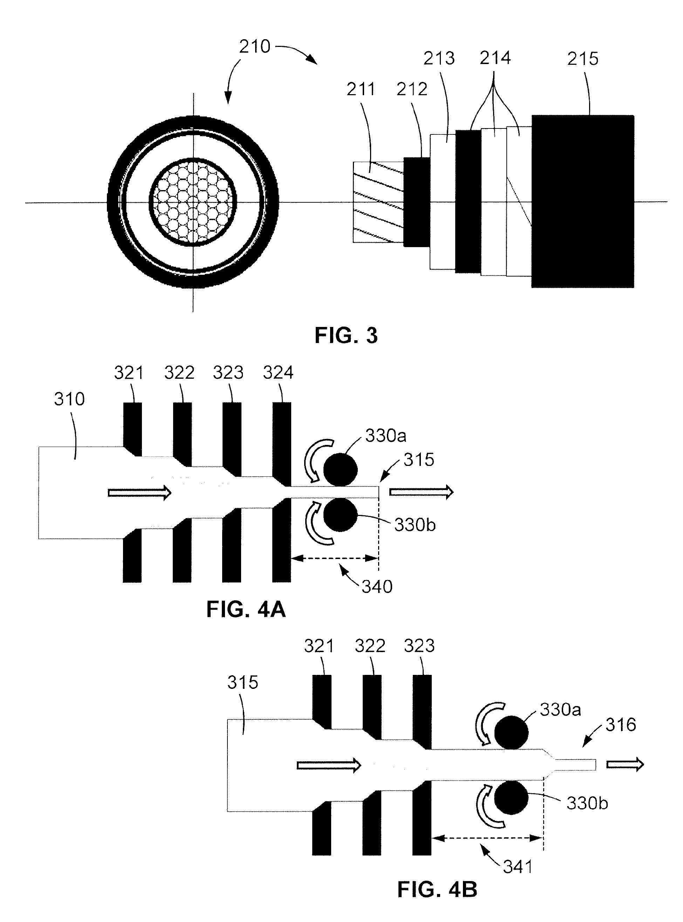

Figure 3 shows, in more detail (in a side view on the right), different layers of one electrical conductor 210 of the subsea cable 200 of Figure 2. The electrical conductor 210 comprises the core conductor 211, the insulation layer 213, the watertight layer 215, a screening layer 212 interposed between the core conductor 211 and the insulation layer 213, and additional screening and insulation layers 214 interposed between the insulation layer 213 and the watertight layer 215.

Figures 4A-4B schematically show a wire drawing process. A plurality of drawing dies 321-324 and pulling discs 330a, 330b are used in the wire drawing process. An electrically conductive wire or rod 310 is pulled by the pulling discs 330a, 330b; the cross-section of the electrically conductive wire or rod 310 is altered due to the drawing dies 321-324 through which the electrically conductive wire or rod 310 goes through. In this respect, the drawing dies 321-324 progressively reduce the cross-section of the electrically conductive wire or rod 310 as the pulling discs 330a, 330b pull the electrically conductive wire or rod 310. To this end, an inner drawing diameter of the drawing dies 321-324 is always smaller than a diameter of the electrically conductive wire or rod 310 to be drawn; further, the inner drawing diameter of a drawing die 321-324 is always smaller than that of a previous drawing die (e.g. the inner drawing diameter of the last drawing die 324 is smaller than the inner drawing diameter of the drawing die 323 before the last drawing die 324) according to the order in which the wire or rod is being drawn in.

When the electrically conductive wire or rod 310 has gone through the last drawing die 324, an electrically conductive wire or rod 315 with a cross-section smaller than an initial cross-section thereof is provided. When the electrically conductive wire or rod 310 is wire drawn, a length 340 of a portion of the resulting electrically conductive wire or rod 315 comprising the smallest cross-section (owing to the last drawing die 324) must be provided such that it extends at least a distance between two facilities (e.g. wind turbines, substations, etc.) that are to be connected with that portion.

After having the necessary length 340, the resulting electrically conductive wire or rod 315 is wire drawn again as shown in Figure 4B. Another plurality of drawing dies 321-323 (a subset of the plurality of drawing dies 321-324 of Figure 4A since the last drawing die 324 has been removed therefrom in Figure 4B) is provided in the wire drawing process of Figure 4B so that the length 340 remains unchanged. Hence, another portion having a greater cross-section can be provided throughout a length 341 owing to the plurality of drawing dies 321-323. The length 341 needs to extend at least a distance between two facilities that are to be connected with the corresponding portion of the resulting electrically conductive wire or rod 316. By repeating such wire drawing processes modifying the drawing dies provided, the electrically conductive wire or rod is provided with more than two different cross-sections, each of these cross-sections extending a length of a corresponding portion.

In some non-illustrated examples, the plurality of drawing dies 321-323 of Figure 4B results from removing more than one drawing die from the plurality of drawing dies of the first wire drawing process. In some other non-illustrated examples, the plurality of drawing dies 321-323 of Figure 4B comprises one or more drawing die/s that is/are different from the plurality of drawing dies of the first wire drawing process.

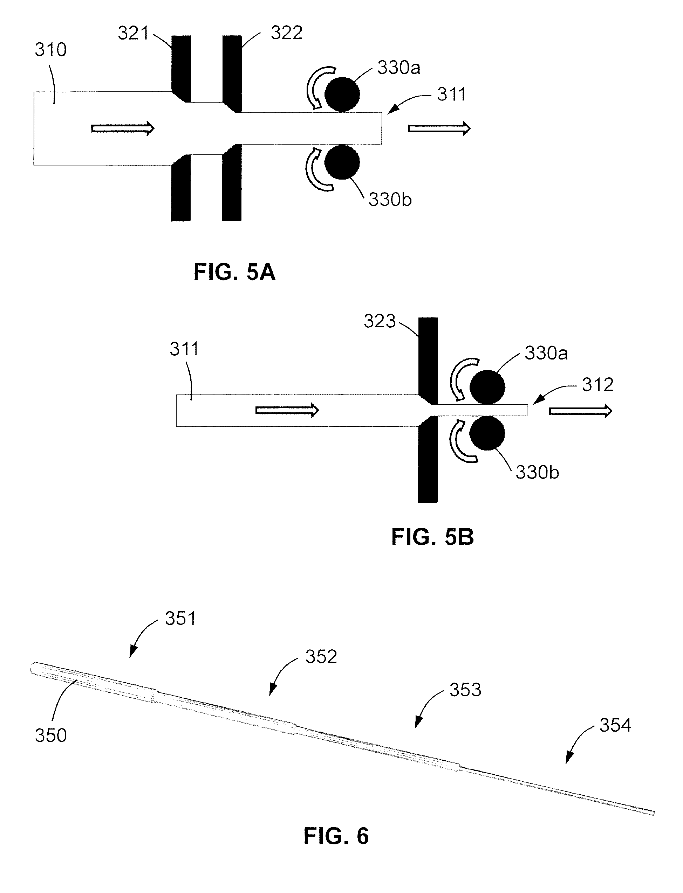

Figures 5A-5B schematically show a wire drawing process. A first one or more drawing dies 321-322 and pulling discs 330a, 330b are used in the wire drawing process. An electrically conductive wire or rod 310 is pulled by the pulling discs 330a, 330b; the cross-section of the electrically conductive wire or rod 310 is altered due to the first one or more drawing dies 321-322 through which the electrically conductive wire or rod 310 goes through. In this example, the first one or more drawing dies 321-322 comprises two drawing dies 321-322 so as to progressively reduce the cross-section of the electrically conductive wire or rod 310 as the pulling discs 330a, 330b pull the electrically conductive wire or rod 310, but it is readily apparent that one or more than two drawing dies could be used instead.

When the electrically conductive wire or rod 310 has gone through the first one or more drawing dies 321-322, an electrically conductive wire or rod 311 with a cross-section smaller than an initial cross-section thereof is provided. In this example, an entire length of the electrically conductive wire or rod 310 is drawn so as to provide the electrically conductive wire or rod 311 with a smaller cross-section.

The resulting electrically conductive wire or rod 311 is wire drawn again as shown in Figure 5B through a second one or more drawing dies 323. The second one or more drawing dies 323 further reduce the cross-section of the electrically conductive wire or rod 311. Therefore, by partially wire drawing (i.e. wire drawing only a portion or a length, so not the entire electrically conductive wire or rod 311 is wire drawn) the electrically conductive wire or rod 311, the resulting electrically conductive wire or rod 312 is provided with different portions, each portion having a different cross-section (a first portion having a cross-section resulting from the drawing through the first one or more drawing dies 321, 322 of Figure 5A, and a second portion having a cross-section resulting from the drawing through the second one or more drawing dies 323 of Figure 5B). By repeating such wire drawing processes with additional third, fourth and further one or more drawing dies, the electrically conductive wire or rod is provided with more than two different cross-sections since each time it is wire drawn a further portion with a smaller cross-section is provided.

Figure 6 shows an electrically conductive wire or rod 350 obtained with a wire drawing process of a method in accordance with an embodiment of the invention. The electrically conductive wire or rod 350 has a plurality of portions 351-354, each of which features a different cross-section. Particularly, a first portion 351 of the electrically conductive wire or rod 350 has a first cross-section or diameter d1; a second portion 352 of the electrically conductive wire or rod 350 has a second cross-section or diameter d2; a third portion 353 of the electrically conductive wire or rod 350 has a third cross-section or diameter d3; and a fourth portion 354 of the electrically conductive wire or rod 350 has a fourth cross-section or diameter d4. The electrically conductive wire or rod 350 has a cross-section or diameter with stepped reductions along a length thereof with respect to a first end thereof (i.e. d1 > d2 > d3 > d4), or with stepped increases along a length thereof with respect to a second end thereof (i.e. d4 < d3 < d2 < d1).

The electrically conductive wire or rod 350 is provided with the plurality of different cross-sections by wire drawing an electrically conductive wire or rod a plurality of times through drawing dies. After the first wire drawing, each time the electrically conductive wire or rod 350 is to be wire drawn, a different one or more drawing dies is provided. For example, at least one drawing die of a plurality of drawing dies may be withdrawn each time the electrically conductive wire or rod 350 is to be wire drawn, particularly the drawing die/s providing the electrically conductive wire or rod with the smallest cross-section or diameter (as shown in Figures 4A-4B); or at least one drawing die is added or replaces another at least one drawing die previously used so that a smaller cross-section or diameter may be provided to the electrically conductive wire or rod (as shown in Figures 5A-5B). A length of each portion of the plurality of portions 351-354 is made longer or shorter each time the electrically conductive wire or rod 350 is wire drawn, and is preferably equal to or greater than a distance between two consecutive wind turbines of an offshore wind farm that are to be connected with a subsea cable, and/or equal to or greater than a distance between a substation and a wind turbine of the offshore wind farm that are to be connected with a subsea cable.

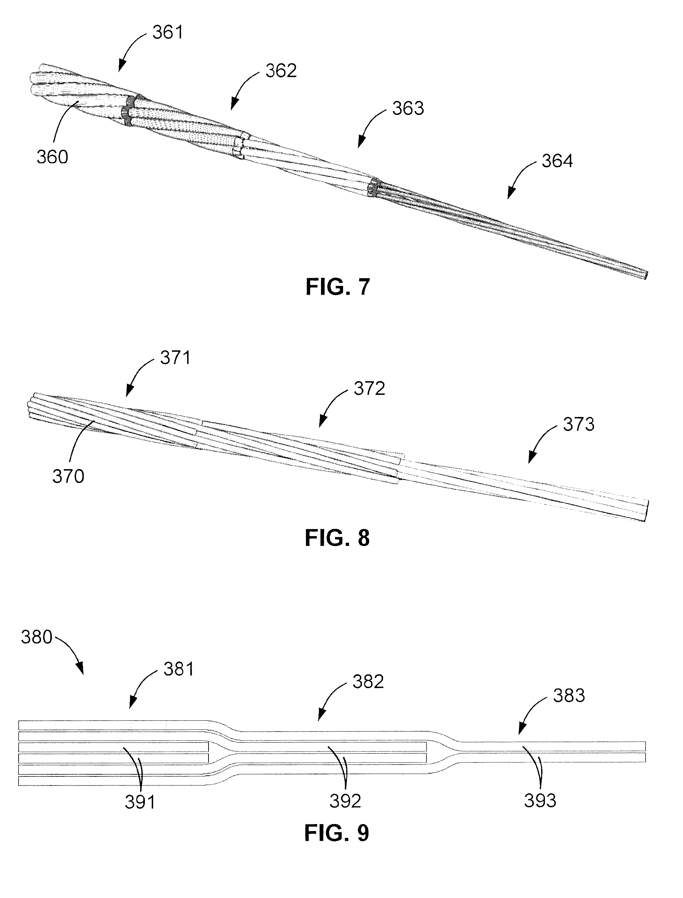

Figure 7 shows a core conductor 360 obtained with a method in accordance with an embodiment of the invention. The core conductor 360 comprises a plurality of electrically conductive wires. Each electrically conductive wire has a plurality of portions, each portion having a different cross-section (for example each of these wires may be the electrically conductive wire or rod 350 of Figure 6).

The plurality of electrically conductive wires is stranded so as to provide the core conductor 360. The core conductor 360 has a plurality of portions 361-364 each of which features a different cross-section. Particularly, a first portion 361 of the core conductor 360 has a first cross-section or diameter d1; a second portion 362 of the core conductor 360 has a second cross-section or diameter d2; a third portion 363 of the core conductor 360 has a third cross-section or diameter d3; and a fourth portion 364 of the core conductor 360 has a fourth cross-section or diameter d4. The core conductor 360 has a cross-section with stepped reductions along a length thereof with respect to a first end thereof (i.e. d1 > d2 > d3 > d4), or with stepped increases along a length thereof with respect to a second end thereof (i.e. d4 < d3<d2<d1).

In some non-illustrated examples, transitions from one portion to another portion may be provided such that a reduction or an increase in cross-section is progressive; such transitions may improve the sturdiness of the core conductor. This may be carried out by spacing the change in cross-section of each wire, that is, some wires have a change in cross-section occurring at a length greater than some other wires, for example.

In some non-illustrated examples, a plurality of electrically conductive wires with a constant cross-section is provided on an outermost part or layer of the core conductor, and a plurality of electrically conductive wires with variable cross-sections is provided on an innermost part or layer of the core conductor. In some non-illustrated examples, a plurality of electrically conductive wires with a constant cross-section is provided on an innermost part or layer of the core conductor, and a plurality of electrically conductive wires with variable cross-sections is provided on an outermost part or layer of the core conductor. Both core conductor configurations may improve the sturdiness of the core conductor.

Figure 8 shows a core conductor 370 obtained with a method in accordance with an embodiment of the invention. The core conductor 370 comprises a plurality of electrically conductive wires with a constant cross-section or diameter. In other embodiments, each of the electrically conductive wires has a plurality of portions, each portion having a different cross-section. In this case, different wire lengths have been coiled on stranding drums (exemplary stranding drums are shown in Figures 9A-9C). The stranding process is started by portion 371, producing the biggest core cross-section. When the stranding drums coiled with the shorter wires are finished, by further stranding with the stranding drums coiled with the longer wires the portion 372 is provided. This process is repeated for portion 373 and, if it is the case, for further portions.

Therefore, by adjusting the wire length loaded on each stranding drum, each different portion (371, 372 and 373) can be easily performed. Thus, automatically and without stranding process interruption, as each drum ends, a core shown on Figure 8 is provided.

The core conductor 370 has a plurality of portions 371-373 each of which features a different cross-section. Particularly, a first portion 371 of the core conductor 370 has a first cross-section or diameter d1; a second portion 372 of the core conductor 370 has a second cross-section or diameter d2; and a third portion 373 of the core conductor 370 has a third cross-section or diameter d3. The core conductor 370 has a cross-section with stepped reductions along a length thereof with respect to a first end thereof (i.e. d1 > d2 > d3), or with stepped increases along a length thereof with respect to a second end thereof (i.e. d3 < d2 < d1).

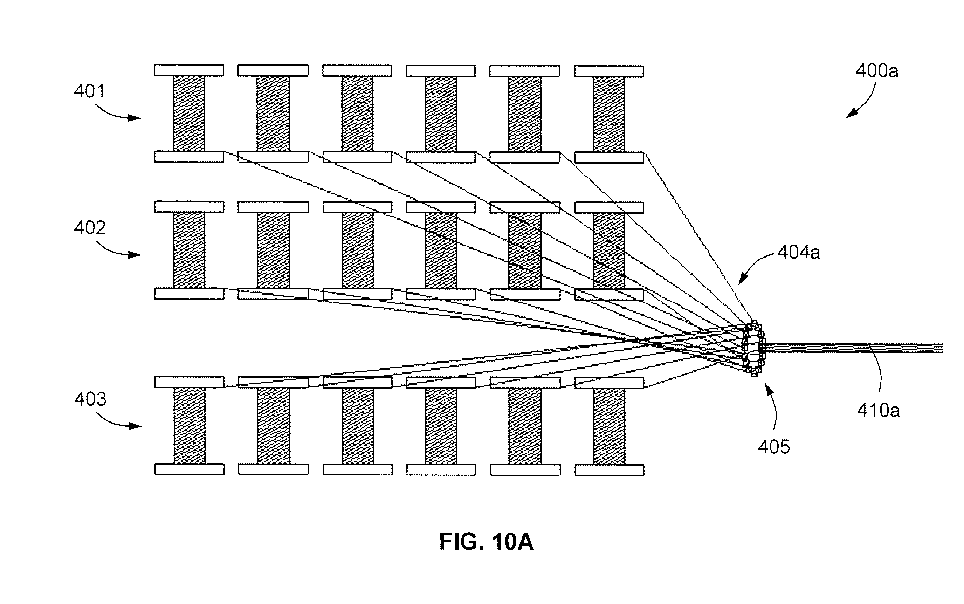

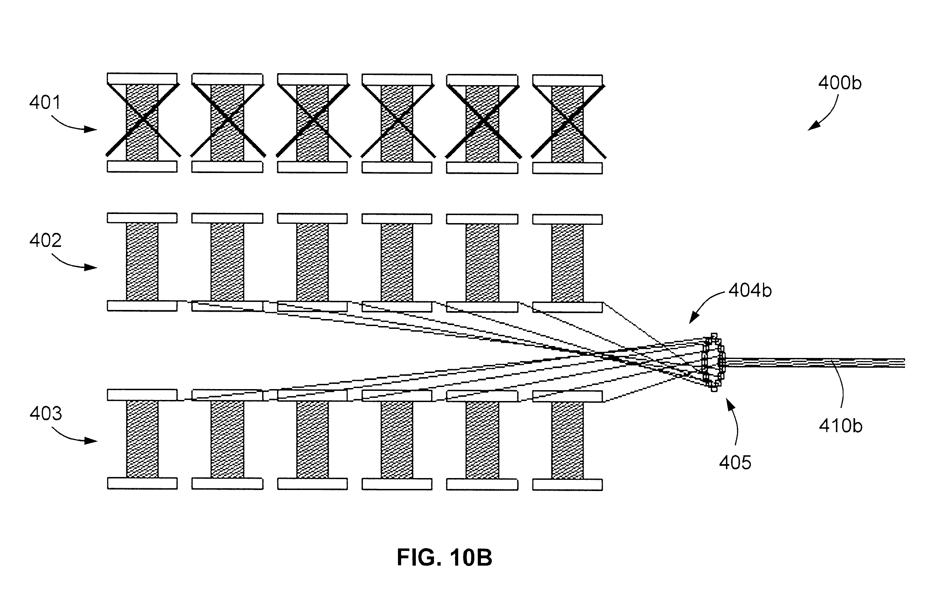

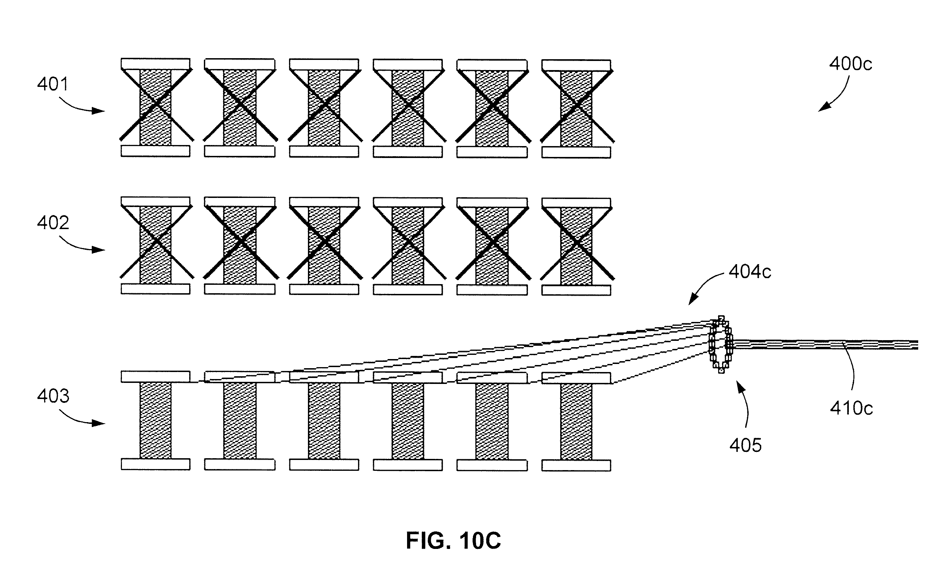

The first portion 371 comprises a first plurality of electrically conductive wires that may be stranded as described next with respect to Figure 10A. The second portion 372 comprises a second plurality of electrically conductive wires that has fewer electrically conductive wires than the first plurality and that may be stranded as described next with respect to Figure 10B; in this respect, the second plurality of electrically conductive wires comprises a subset of electrically conductive wires of the first plurality, that is, the first portion 371 comprises the electrically conductive wires of the second portion 372 and one or more additional electrically conductive wires that provide the first portion 371 with the cross-section or diameter d1 larger than the cross-section or diameter d2 of the second portion 372. The third portion 373 comprises a third plurality of electrically conductive wires that has fewer electrically conductive wires than the second plurality (the third plurality comprises a subset of electrically conductive wires of the second plurality of the second portion 372) and that may be stranded as described next with respect to Figure 10C.

Figure 9 diagrammatically shows a section of a core conductor 380 obtained with a method in accordance with an embodiment of the invention. The core conductor 380 comprises a plurality of electrically conductive wires 391-393 with a constant cross-section or diameter.

The stranding process is started by first portion 381, producing the biggest core cross-section with first wires 391 (in an inner-most part of the first portion 381), second wires 392 and third wires 393 (in an outer-most part of the first portion 381). When the stranding drums coiled with the first wires 391 are finished (or the first wires 391 are cut), by further stranding with the stranding drums coiled with the second wires 392 (in an inner-most part of a second portion 382) and the third wires 393 (in an outer-most part of the second portion 382) the second portion 382 is provided (a length thereof depending upon a length of the second wires 392 as coiled in the stranding drums, or a position at which the second wires 392 are cut). This process is repeated at least for a third portion 383 in which only the third wires 393 remain as the second wires 392 have been already stranded in the first and the second portions 381, 382.

The stranding process with which the core conductor 380 is obtained may be, for example, the one described next with reference to Figures 10A-10C.

Figures 10A-10C schematically show a stranding process 400a-400c of a method for producing the core conductor 370 of Figure 8 and/or the core conductor 380 of Figure 9.

Figure 10A shows a first stage of the stranding process 400a in which a stranding machine 405 takes a first plurality of electrically conductive wires 404a from first, second and third sets of electrically conductive wires 401-403 and strands it to produce a core conductor with a first cross-section 410a. Figure 10B shows a second stage of the stranding process 400b in which the stranding machine 405 takes a second plurality of electrically conductive wires 404b from the first and second sets of electrically conductive wires 401, 402 and strands it to provide the core conductor of Figure 10A with a second cross-section 410b that is smaller than the first cross-section 410a. Figure 10C shows a third stage of the stranding process 400c in which the stranding machine 405 takes a third plurality of electrically conductive wires 404c from the first set of electrically conductive wires 401 and strands it to provide the core conductor of Figures 10A, 10B with a third cross-section 410c that is smaller than the first and second cross-sections 410a, 410b. By stranding the electrically conductive wires 404a-404c during the stranding process 400a-400c more or less times, the lengths of each portion of the core conductor having a different cross-section 410a-410c are adjusted.

In some cases, the electrically conductive wires that, during the stranding process (in the second and third stages of the stranding process 400b, 400c), are not to be stranded due to the reduction in the number thereof, are cut so that the stranding machine 405 does not strand them. In some other cases, lengths of the electrically conductive wires are adjusted in advance (they are provided with longer or shorter lengths depending on a length that a corresponding portion of the core conductor must have) so that the entire lengths may be stranded by the stranding machine 405 and result in a core conductor with variable cross-section.

To achieve greater stability and sturdiness of the outer geometry of the core conductor, the stranding process may be configured so that the longest wires remain on the surface of the core conductor. In this way, the outer surface of the core conductor will not present irregularities that may affect the correct application of the rest of the conductor layers which encapsulate the core conductor.

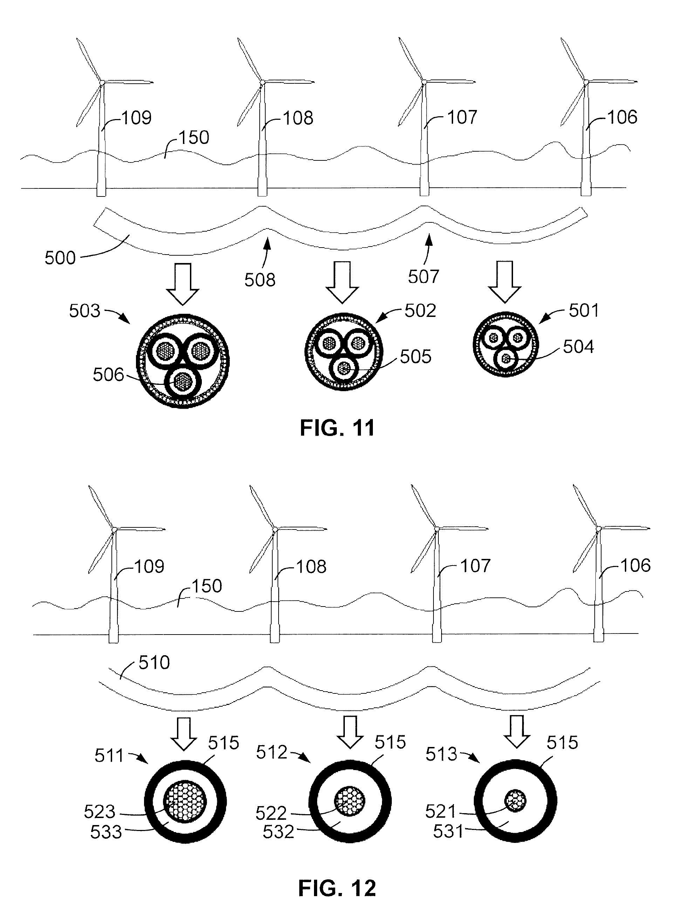

Figure 11 shows a method for installing a subsea cable 500 in an offshore wind farm in accordance with an embodiment of the invention. In Figure 11 there is shown a string of wind turbines 106-109 in a sea 150.

The method comprises laying the subsea cable 500 from a first wind turbine 106 to a second wind turbine 109 passing through third and fourth wind turbines 107, 108 in a continuous manner. That is, the subsea cable 500 is continuously laid so that portions thereof are proximate to each wind turbine 106-109 of the string; preferably, each of these portions is at a distance that is less than 100 meters from the foundation of a wind turbine 106-109, more preferably at a distance that is less than 50 meters, and/or less than 25 meters, and/or less than 10 meters.

The method comprises cutting the subsea cable 500, once it has been laid, at the portions that are proximate to intermediate wind turbines 107, 108 (the term intermediate referring to wind turbines that are between ends of the subsea cable 500), that is at a first position 507 where a portion of the subsea cable 500 is close to the third wind turbine 107, and at a second position 108 where a portion of the subsea cable 500 is close to the fourth wind turbine 108. Precisely at the first and second positions 507, 508 a cross-section or diameter of each core conductor within the subsea cable 500 varies so that the subsea cable 500 is adapted to transport additional electric current provided by the intermediate wind turbines 107, 108. The subsea cable 500 may be first lifted to platforms (not illustrated) of the wind turbines 107, 108 so that it may be cut outside of the water.

Further, the subsea cables resulting from cutting the subsea cable 500 may be connected to the wind turbines 106-109.

The subsea cable 500, which may be produced with the methods of the present disclosure, comprises three electrical conductors with core conductors having a plurality of different cross-sections so that more electric current may be transferred by the subsea cable 500 upon connection to the intermediate wind turbines 107, 108. In this sense, the subsea cable 500 has a plurality of different diameters, particularly it comprises a first portion 501 with a diameter d1 (each core conductor having a first cross-section or diameter 504), a second portion 502 with a second diameter d2 greater than the first diameter d1 (each core conductor having a second cross-section or diameter 505 greater than the first cross-section or diameter 504), and a third portion 503 with a third diameter d3 greater than the second diameter d2 (each core conductor having a third cross-section or diameter 506 greater than the second cross-section or diameter 505). At the first and the second positions 507, 508 the diameters of the subsea cable 500 vary (and so does the cross-sections and diameters of each core conductor) from the first diameter d1 to the second diameter d2, and from the second diameter d2 to the third diameter d3, respectively.

In other embodiments, the method comprises laying the subsea cable 500 from a substation (not illustrated) to the first wind turbine 106 passing through the second, third and fourth wind turbines 107-109 in a continuous manner.

Figure 12 shows a subsea cable 510 obtained with a method in accordance with an embodiment of the invention and which is installed for connecting the string of wind turbines 106-109 in the sea 150 (the installation method may be, for example, the same as the one described with respect to Figure 11). The subsea cable 510 has a substantially constant cross-section throughout a length thereof even though it comprises one or more electrical conductors 515, each electrical conductor 515 comprising a core conductor with a plurality of different cross-sections 521-523.

In a first portion 511 of the subsea cable 510, the core conductor of each electrical conductor 515 has a first cross-section or diameter 521. Further, each electrical conductor 515 also comprises an insulation layer that in the first portion of the subsea cable 510 has a first thickness 521 (computed as the difference between its outer and inner diameters). In a second portion 512 of the subsea cable 510, the core conductor of each electrical conductor 515 has a second cross-section or diameter 522 greater than the first cross-section or diameter 521, whereas the insulation layer has a second thickness 532 smaller than the first thickness 531. In a third portion 513 of the subsea cable 510, the core conductor of each electricalconductor 515 has a third cross-section or diameter 523 greater than the second cross-section or diameter 522, and the insulation layer has a third thickness 533 smaller than the second thickness 532. By decreasing the thickness 531-533 of the insulation layer as the cross-section or diameter 521-523 of the core conductor increases, the cross-section of each electrical conductor 515 is kept constant throughout the length of the subsea cable 510.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for producing a subsea cable (200, 500, 510), comprising:
providing a first plurality of electrically conductive wires (391-393, 404a);
stranding (400a) the first plurality of electrically conductive wires (391-393, 404a) in order to provide a first core conductor (211, 370, 380) of the subsea cable (200, 500, 510); and
stranding (400b), in the first core conductor (211, 370, 380), a second plurality of electrically conductive wires (392-393, 404b) comprising fewer wires than the first plurality of electrically conductive wires (391-393, 404a), thereby providing the first core conductor (211, 370, 380) with a plurality of different cross-sections (410a-410c, 504-506, 521-523).

2. The method of claim 1, further comprising:
stranding, in the first core conductor (211, 370, 380), a third plurality of electrically conductive wires (393, 404c) comprising fewer wires than the second plurality of electrically conductive wires (392-393, 404b).

3. The method of any of claims 1-2, further comprising:
before stranding (400a) the first plurality of electrically conductive wires (391-393, 404a), adjusting a length of at least one electrically conductive wire (393) of the first plurality of electrically conductive wires (391-393, 404a) to provide the second plurality of electrically conductive wires (392-393, 404b) upon stranding (400a) the first plurality of electrically conductive wires (391-393, 404a); or
after stranding (400a) the first plurality of electrically conductive wires (391-393, 404a), cutting at least one electrically conductive wire (391) of the first plurality of electrically conductive wires (391-393, 404a) to provide the second plurality of electrically conductive wires (392-393, 404b).

4. The method of any of claims 1-3, wherein at least one electrically conductive wire (391-393) of the first plurality of electrically conductive wires (391-393, 404a) has a constant cross-section.

5. The method of any of claims 1-3, wherein at least one electrically conductive wire (350) of the first plurality of electrically conductive wires (404a) has a plurality of different cross-sections (351-354).

6. A method for producing a subsea cable (200, 500, 510), comprising:
providing a plurality of electrically conductive wires (310);
for each wire (310) of the plurality of electrically conductive wires (310):
drawing the wire (310) through a first drawing die (321-324) thereby providing a first electrically conductive drawn wire (311, 315); and
drawing the first electrically conductive drawn wire (311, 315) through a second drawing die (321-324) thereby providing the first electrically conductive drawn wire (312, 316, 350) with at least two different cross-sections (351-354);
after the steps of drawing each wire (310) and drawing each first electrically conductive drawn wire (311, 315), stranding the plurality of first electrically conductive drawn wires (350) thereby providing a first core conductor (211, 360) of the subsea cable (200, 500, 510) with a plurality of different cross-sections (361-364, 504-506, 521-523).

7. The method of claim 6, further comprising:
for each wire (310) of the plurality of electrically conductive wires (310), drawing the first electrically conductive drawn wire (312, 316, 350) with the at least two different cross-sections (351-354) through a third drawing die, thereby providing the first electrically conductive drawn wire (312, 316, 350) with at least three different cross-sections (361-364, 504-506, 521-523).

8. The method of any of claims 1-7, further comprising:
repeating steps of the method in order to provide at least a second core conductor (211, 360, 370, 380) with a plurality of different cross-sections (504-506, 521-523); and
assembling the first and the second core conductors (211, 360, 370, 380) into the subsea cable (200, 500, 510).

9. The method of any of claims 1-8, further comprising providing an insulation layer (213) surrounding each core conductor (211, 360, 370, 380), wherein:
the insulation layer (213) comprises a plurality of thicknesses (531-533) such that a diameter of each core conductor (211, 360, 370, 380) with the insulation layer (213) is constant in a lengthwise direction of each core conductor (211, 360, 370, 380); or.
the insulation layer (213) has a constant thickness; and wherein the subsea cable (200, 500, 510) comprises a plurality of different diameters (501-503).

10. The method of any of claims 1-9, further comprising encapsulating each core conductor (211, 360, 370, 380) by providing a first watertight layer (215), a plastic filling (220), an armor bedding layer (221), a metallic armor layer (222), a second watertight layer (223) and a plastic yarn layer (224).

11. A subsea cable (200, 500, 510) obtained with a method according to any of claims 1-10.

12. A method for installing a subsea cable (200, 500, 510) in an offshore wind farm (100), the offshore wind farm (100) comprising a substation (101) and a plurality of wind turbines (102, 106-109), the method comprising:
laying the subsea cable (200, 500, 510), continuously, from a first location to a first wind turbine (102d, 106) of the plurality of wind turbines (102, 106-109) passing through at least a second wind turbine (102b-102c, 107-108) of the plurality of wind turbines (102, 106-109), the first location being a location of the substation (101) or a location of a third wind turbine (102a, 109) of the plurality of wind turbines (102, 106-109).

13. The method of claim 12, further comprising producing the subsea cable (200, 500, 510) with a method according to any of claims 1-10.

14. The method of any of claims 12-13, wherein:
the subsea cable (200, 500, 510) is laid such that a first portion (503) thereof is laid before laying a second portion thereof (501, 502); and
a cross-section of each core conductor (211, 360, 370) in the first portion (503) of the subsea cable (200, 500, 510) is greater than the cross-section of each core conductor (211, 360, 370, 380) in the second portion (501, 502) of the subsea cable (200, 500, 510).

15. The method of any of claims 12-14, further comprising:
at each wind turbine (102b-102c, 107-108) between ends of the subsea cable laid (200, 500, 510), cutting the subsea cable (200, 500, 510) thereby providing first and second subsea cables (111-114), and connecting an end of each of the first and the second subsea cables (111-114) to the wind turbine (102b-102c, 107-108);
wherein steps of cutting the subsea cable (200, 500, 510) and connecting ends of the first and the second subsea cables (111-114) are carried out after the step of laying the subsea cable (200, 500, 510).
